(19) Europäisches Patentamt / European Patent Office / Office européen des brevets

(11) **EP 4 582 472 A1**

(12) **EUROPEAN PATENT APPLICATION**
published in accordance with Art. 153(4) EPC

(43) Date of publication:
**09.07.2025 Bulletin 2025/28**

(21) Application number: **23860532.3**

(22) Date of filing: **31.08.2023**

(51) International Patent Classification (IPC):
***C08J 11/08*** (2006.01)

(52) Cooperative Patent Classification (CPC):
**C08J 11/08; Y02W 30/62**

(86) International application number:
**PCT/JP2023/032035**

(87) International publication number:
**WO 2024/048770 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 JP 2022138463**

(71) Applicant: **Japan Science and Technology
Agency
Kawaguchi-shi, Saitama 332-0012 (JP)**

(72) Inventors:
• SUZUKI, Daisuke
  Ueda-shi, Nagano 386-8567 (JP)
• MINATO, Haruka
  Ueda-shi, Nagano 386-8567 (JP)

(74) Representative: **Vossius & Partner
Patentanwälte Rechtsanwälte mbB
Siebertstrasse 3
81675 München (DE)**

(54) **METHOD FOR PRODUCING POLYMER FINE PARTICLES, POLYMER FINE PARTICLE MOLDED BODY AND METHOD FOR RECYCLING POLYMER FINE PARTICLES**

(57)    The present invention provides a method for recycling polymer fine particles, the method being applicable to various polymers. This method for recycling polymer fine particles comprises (A) a step for dismantling a first polymer fine particle molded body, which has been obtained by molding first polymer fine particles, into second polymer fine particles by applying external stimuli to the first polymer fine particle molded body.

Fig. 1

**Description**

Technical Field

The present invention relates to a method for producing polymer fine particles, a polymer fine particle formed body, and a method for recycling polymer fine particles.

Background Art

In recent years, from the viewpoint of suppressing depletion of resources and environmental pollution, methods for recycling polymers have been actively developed. The methods for recycling polymers include a method in which a polymer is dissolved in a solvent to be purified and reused as a polymer (for example, Patent Literatures 1 and 2) and a method in which a polymer is decomposed into monomers and reused (for example, Patent Literatures 3 and 4).

Patent Literature 1 (JP 2009-030017 A) describes a method for recycling a polymer in which a polymer, such as polymethyl methacrylate is dissolved in a liquid containing water and a poor solvent for the polymer, and a polymer precipitate precipitated from the polymer solution is reused.

Patent Literature 2 (JP 2001-302842 A) describes a method for treating waste foamed polystyrene in which waste foamed polystyrene is dissolved in limonene, and limonene is evaporated and separated from the limonene solution to recover polystyrene.

Patent Literature 3 (JP 2006-083145 A) describes a recycling method using foamed polystyrene including: dissolving recovered foamed polystyrene in a solvent composed of d-limonene to form a polystyrene solution; heating and vaporizing the polystyrene solution to separate polystyrene; regenerating a styrene monomer from the polystyrene; and using the regenerated styrene monomer as a raw material to produce 1,1-diarylethane by a Friedel-Crafts reaction.

Patent Literature 4 (JP 2004-196880 A) describes a method for depolymerizing polyethylene terephthalate in which in heating, melting, and depolymerizing polyethylene terephthalate, an extruder and a reactor provided subsequent to an outlet of the extruder are used to perform heating, melting, and depolymerization reaction of the polyethylene terephthalate, glycol is charged after the outlet of the extruder, and the glycol is mixed with the polyethylene terephthalate by a mixer provided between the extruder and the reactor.

Meanwhile, a material obtained by forming polymer fine particles has been proposed as a formed body of a polymer (Patent Literatures 5 and 6: JP 2021-195521 A and JP 2022-91113 A).

Citation List

Patent Literature

PTL 1: JP 2009-030017 A
PTL 2: JP 2001-302842 A
PTL 3: JP 2006-083145 A
PTL 4: JP 2004-196880 A
PTL 5: JP 2021-195521 A
PTL 6: JP 2022-91113 A

Summary of Invention

Technical Problem

The above-described method in which a polymer is dissolved in a solvent to be purified and reused as a polymer, and the above-described method in which a polymer is decomposed into monomers and reused have issues in that applicable polymers are limited, the purification process is complicated, the production cost is high, and the like.

An object of the present invention is to provide a method for producing polymer fine particles from a formed body of polymer fine particles by a simple operation. In one embodiment, polymer fine particles produced from a formed body of polymer fine particles are reused. Another object of the present invention is to provide a polymer fine particle formed body which can be decomposed by a simple operation. Still another object of the present invention is to provide a method for recycling polymer fine particles, which is applicable to a wide variety of polymers.

Solution to Problem

The methods in the known art attempt to reuse a polymer by decomposing the polymer into polymer chains or monomers. Meanwhile, the present inventors have found that various polymers can be formed, decomposed, and reused by handling the polymers in the form of fine particles.

That is, the present invention includes the following aspects.

[1] A method for producing polymer fine particles, the method comprising applying an external stimulus to a formed body of polymer fine particles to decompose the formed body into the polymer fine particles.

[2] The method according to aspect [1], wherein a method for applying the external stimulus is swelling the polymer fine particles with a solvent.

[3] The method according to aspect [2], wherein the solvent contains at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms, and $R^2$ is an alkyl group having from 1 to 3 carbon atoms.

[4] The method according to any one of aspects [1] to [4], wherein a polymer constituting the polymer fine particles is a (meth)acrylate-based polymer or a poly(meth)acrylamide-based polymer.

[5] A polymer fine particle formed body made of fine particles of a polymer, wherein 80 mol% or more of monomers constituting the polymer is at least one monomer selected from the group consisting of a polyalkylene glycol (meth)acrylate, an alkoxy group-containing methacrylate, an acrylate containing an alkoxy group having 2 or more carbon atoms, (meth)acrylamide, and derivatives thereof.

[6] The polymer fine particle formed body according to aspect [5], which does not contain a structure derived from rotaxane.

[7] A method for recycling polymer fine particles, the method comprising:

(A) applying an external stimulus to a first polymer fine particle formed body obtained by forming first polymer fine particles to decompose the first polymer fine particle formed body into second polymer fine particles.

[8] The method for recycling polymer fine particles according to aspect [7], wherein the first polymer fine particles before forming have an average particle size of from 50 nm to 5 μm.

[9] The method for recycling polymer fine particles according to aspect [7] or [8], wherein a change ratio between the average particle size of the first polymer fine particles before forming and an average particle size of the second polymer fine particles after decomposition is 15% or less.

[10] The method for recycling polymer fine particles according to any one of aspects [7] to [9], wherein a ratio of a total mass of the second polymer fine particles obtained after the decomposition to a total mass of the first polymer fine particles used for the forming is 0.95 or more.

[11] The method for recycling polymer fine particles according to any one of aspects [7] to [10], further comprising: (B) forming the second polymer fine particles obtained in the step (A) to produce a second polymer fine particle formed body.

[12] The method for recycling polymer fine particles according to aspect [11], wherein the forming in the step (B) is performed using a second polymer fine particle dispersion in which the second polymer fine particles are dispersed in a dispersion medium.

[13] The method for recycling polymer fine particles according to aspect [11] or [12], further comprising performing the step (A) again using the second polymer fine particle formed body obtained in the step (B) as the first polymer fine particle formed body in the step (A).

[14] The method for recycling polymer fine particles according to any one of aspects [9] to [11], wherein the first polymer fine particle formed body further contains a functionalizing agent.

[15] The method according to aspect [14], further comprising separating the second polymer fine particles and the functionalizing agent.

[16] A method, which is a closed-loop recycling method of a polymer using polymer fine particles, the method comprising, in this order:

(a) providing a polymer fine particle dispersion containing polymer fine particles and a dispersion medium;
(b) forming the polymer fine particle dispersion to obtain a formed body; and
(c) swelling the polymer fine particles constituting the formed body by adding a solvent as an external stimulus to the formed body and decomposing the formed body into the polymer fine particles.

[17] The method according to aspect [16], wherein the polymer fine particles have an average particle size of from 50 nm to 5 $\mu$m.

[18] The method according to aspect [16] or [17], wherein the polymer fine particles are (meth)acrylic polymer fine particles or poly(meth)acrylamide fine particles.

[19] The method according to aspect [18], wherein the solvent contains at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms, and $R^2$ is an alkyl group having from 1 to 3 carbon atoms.

[20] The method according to any one of aspects [16] to [19], wherein a change ratio in average particle size between the polymer fine particles in the polymer fine particle dispersion and the polymer fine particles obtained in the step (c) is 15% or less.

[21] The method according to any one of aspects [16] to [10], wherein the dispersion medium is an aqueous solvent.

[22] The method according to aspect [21], wherein the step (b) comprises volatilizing the aqueous solvent to obtain a formed body.

[23] The method according to aspect [22], wherein the step (b) comprises annealing the formed body.

[24] The method according to any one of aspects [21] to [23], wherein the polymer fine particle dispersion further contains a functionalizing agent.

[25] The method according to aspect [24], further comprising, after the step (c):

(d) separating the polymer fine particles and the functionalizing agent.

[26] The method according to any one of aspects [16] to [20], wherein the dispersion medium is air.

[27] The method according to aspect [26], wherein the step (b) comprises heat-pressing the polymer fine particle dispersion to obtain a formed body.

Advantageous Effects of Invention

According to the present invention, it is possible to produce polymer fine particles from a formed body of polymer fine particles by a simple operation. The polymer fine particles produced from the formed body of the polymer fine particles can be reused. According to the present invention, it is possible to provide a polymer fine particle formed body which can be decomposed by a simple operation. Moreover, according to the present invention, it is possible to provide a method for recycling polymer fine particles, which is applicable to various polymers.

Brief Description of Drawings

[Fig. 1] Fig. 1 is AFM images of polymer fine particles of Production Example 5 (unused polymer fine particles) and polymer fine particles after decomposition in Example 10, and histograms of particle sizes (Krummbein diameters) (nm) of the respective polymer fine particles.

[Fig. 2] Fig. 2 is stress-strain curves of a polymer fine particle film MA-E (cycle 0) and a polymer fine particle film MA-E (cycle 1) produced in Example 10.

[Fig. 3] Fig 3 is stress-strain curves of a blue polymer fine particle film MA-E (cycle 0) and a polymer fine particle film MA-E (cycle 1) produced in Example 16.

Description of Embodiments

Hereinafter, the present invention will be described in detail. One embodiment of the present invention includes a method for producing polymer fine particles from a formed body of polymer fine particles (hereinafter, sometimes simply referred to as a formed body). Another embodiment includes a formed body of polymer fine particles. Still another embodiment includes a method for recycling polymer fine particles. These will be described below.

Polymer Fine Particles

First, polymer fine particles used in the present invention will be described.

The type of a polymer constituting the polymer fine particles constituting a formed body of the polymer fine particles used in the present invention (hereinafter, sometimes referred to as polymer fine particles) is not particularly limited. The polymer constituting the polymer fine particles may be one type, or two or more types. Examples of the polymer include a natural resin and a synthetic polymer. Examples of the natural resin include casein, gelatin, and starch. Examples of the synthetic polymer include an acrylic resin, a polyolefin resin, a polystyrene resin, a polyester resin, a polyamide resin, a polyimide resin, a novolac resin, a polyurethane resin, a polycarbonate resin, a cellulose-based resin, polyalkylene glycol, polysiloxane, polyrotaxane, and derivatives of these resins.

Each polymer constituting the polymer fine particles may be a homopolymer composed of a single type of monomer or a copolymer composed of a plurality of types of monomers. In a case of the copolymer, it may be a block copolymer or a random copolymer.

The weight average molecular weight of the polymer constituting the polymer fine particles is not limited, but the lower limit thereof can be usually 10,000 or more, 50,000 or more, or 80,000 or more, and the upper limit thereof can be usually 5,000,000 or less, 4,000,000 or less, or 3,000,000 or less. As used herein, the weight average molecular weight means a value as measured by gel permeation chromatography (GPC) calibrated with polystyrene standard.

The average particle size of the polymer fine particles used in the present invention is not particularly limited, but is preferably from 50 nm to 5 $\mu$m, more preferably from 60 nm to 1500 nm, and still more preferably from 70 nm to 1200 nm.

In the present disclosure, the average particle size of the polymer fine particles is an average value of values obtained by using image analysis software to analyze a particle width at which the height (maximum value - minimum value) of a polymer fine particle is halved from an image obtained using an atomic force microscope and selecting 100 arbitrary polymer fine particles.

The polymer fine particles used in the present invention need not have a hierarchical structure, and may have a hierarchical structure, such as a core-shell structure.

The form of the polymer fine particles used in the present invention is not particularly limited, and may be spherical, ellipsoidal or rod-shaped. The polymer fine particles may be hollow.

The polymer fine particles used in the present invention may contain a solvent or need not contain a solvent. Examples of the solvent contained in the polymer fine particles include a solvent used for producing polymer fine particles and a dispersion medium used for producing a polymer fine particle formed body, and specific examples thereof include water.

In one embodiment, the polymer constituting the polymer fine particles is a (meth)acrylic polymer or poly(meth)acrylamide. These polymers may have a cross-linked structure or need not have a cross-linked structure.

A (meth)acrylate used for production of the (meth)acrylic polymer is not particularly limited, and specific examples thereof include linear or branched alkyl (meth)acrylates, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth) acrylate, tert-butyl (meth)acrylate, 2-ethylhexyl (meth)acrylate, isononyl (meth)acrylate, isodecyl (meth)acrylate, dodecyl (meth)acrylate, and stearyl (meth)acrylate; cyclic alkyl (meth)acrylates, such as cyclohexyl (meth)acrylate, dicyclohexyl (meth)acrylate, and isobornyl (meth)acrylate; hydroxy group-containing (meth)acrylates, such as 2-hydroxyethyl (meth) acrylate, 2-hydroxypropyl (meth)acrylate, and 2-hydroxybutyl (meth)acrylate; polyalkylene glycol (meth)acrylates, such as 2-(2-methoxyethoxy)ethyl (meth)acrylate, ethoxydiethylene glycol (meth)acrylate, butoxydiethylene glycol (meth) acrylate, methoxydipropylene glycol (meth)acrylate, methoxytripropylene glycol (meth)acrylate, methoxypolyethylene glycol (meth)acrylate, polyethylene glycol (meth)acrylate, polypropylene glycol (meth)acrylate, poly(ethylene glycol-tetramethylene glycol) (meth)acrylate, poly(propylene glycol-tetramethylene glycol) (meth)acrylate, and polyethylene glycol-polypropylene glycol (meth)acrylate; aromatic group-containing (meth)acrylates, such as benzyl (meth)acrylate and 9-anthryl (meth)acrylate; amino group-containing (meth)acrylates, such as N,N-dimethylaminoethyl (meth)acrylate and N,N-diethylaminoethyl (meth)acrylate; alkoxyethyl (meth)acrylates, such as 2-methoxyethyl (meth)acrylate, 2-ethoxyethyl (meth)acrylate, 2-propoxyethyl (meth)acrylate, and 2-cyclohexyloxyethyl (meth)acrylate; aryloxyethyl (meth)acrylates, such as phenoxyethyl (meth)acrylate; and tetrahydrofurfuryl (meth)acrylate and 2-morpholinoethyl (meth)acrylate. Among them, from the viewpoint of easy decomposition, linear or branched alkyl (meth)acrylates, polyalkylene glycol (meth)acrylates, and alkoxyethyl (meth)acrylates are preferable, linear or branched alkyl (meth) acrylates in which the number of carbon atoms of the alkyl group is from 1 to 4, polyalkylene glycol (meth)acrylates containing a diethylene glycol unit, and alkoxyethyl (meth)acrylates in which the number of carbon atoms of the alkoxy group is from 1 to 3 are more preferable, and methyl (meth)acrylate, 2-(2-methoxyethoxy) ethyl (meth)acrylate, ethoxydiethylene glycol (meth)acrylate, 2-methoxyethyl (meth)acrylate, and 2-ethoxyethyl (meth)acrylate are still more preferable. The (meth)acrylate may be used alone or in combination of two or more thereof in any ratio.

In one embodiment, the (meth)acrylic polymer is a homopolymer or a copolymer of (meth)acrylate. The (meth) acrylic polymer may be a copolymer of (meth)acrylate and another monomer. The other monomer is not particularly limited, and specific examples thereof include (meth)acrylamide, (meth)acrylic acid, itaconic acid, crotonic acid, maleic acid, fumaric acid, acrylonitrile, styrene, p-methylstyrene, $\alpha$-methylstyrene, vinyl acetate, vinyl chloride, and rotaxane having one polymerizable unsaturated group. The other monomer may be used alone or in combination of two or more thereof in any ratio.

The (meth)acrylamide used in production of the poly(meth)acrylamide is not particularly limited, and specific examples thereof include (meth)acrylamide, N,N-dimethyl (meth)acrylamide, N-isopropyl (meth)acrylamide, N-tert-butyl (meth)acrylamide, and N-benzylacryl (meth)acrylamide. The (meth)acrylamide may be used alone or in combination of two or more thereof in any ratio.

Method for producing polymer fine particles from monomer

The method for producing polymer fine particles from a monomer is not particularly limited, and polymer fine particles capable of producing the polymer fine particle formed body used in the present invention can be appropriately produced. In one aspect, a monomer which is a constituent component of a polymer constituting polymer fine particles is polymerized by a common method to be fine particle-shaped and is purified as necessary, whereby the polymer fine particles can be produced. In a specific aspect, polymer fine particles can be produced as a polymer fine particle dispersion. The polymer fine particle dispersion will be described below.

The polymer fine particle dispersion contains polymer fine particles and a dispersion medium. The polymer fine particles used here are the same as described above.

Examples of the dispersion medium include a solvent and air. In a case where the dispersion medium is a solvent, the polymer fine particle dispersion is provided as a dispersion liquid. In a case where the dispersion medium is air, the polymer fine particle dispersion is provided as a powder.

In one embodiment, the dispersion medium is an aqueous solvent. In the present disclosure, the aqueous solvent means a solvent having a water content of more than 50 vol%. The water content in the dispersion medium may be 80 vol% or more, 90 vol% or more, 95 vol% or more, 99 vol% or more, or 100 vol%. The aqueous solvent may contain water and a water-miscible organic solvent. Examples of the water-miscible organic solvent include methanol, ethanol, propanol, N,N-dimethylformamide (DMF), and acetone. The aqueous solvent is preferably water. As the water, distilled water, deionized water, pure water, or the like can be used.

In this embodiment, the polymer fine particle dispersion is provided as an aqueous solvent dispersion liquid of polymer fine particles. The content of the polymer fine particles in the aqueous solvent dispersion liquid is preferably from 1 mass% to 50 mass%, and more preferably from 3 mass% to 40 mass%. Within the above ranges, the dispersion stability of polymer fine particles in the aqueous solvent dispersion liquid is good.

The aqueous solvent dispersion liquid of polymer fine particles can contain a functionalizing agent. The functionalizing agent is not particularly limited as long as it imparts a specific function to the formed body and is soluble or dispersible in the aqueous solvent, and specific examples thereof include a pigment, a dye, an organic filler, and an inorganic filler. The size of the dispersible functionalizing agent is typically from 1 nm to 1 mm. The functionalizing agent may be used alone or in combination of two or more thereof in any ratio.

Examples of the pigment include an inorganic pigment and an organic pigment.

Examples of the inorganic filler include a silica filler and carbon black.

The content of the functionalizing agent in the aqueous solvent dispersion liquid of polymer fine particles is preferably from 0.01 mass% to 20 mass%, and more preferably from 0.01 mass% to 5 mass%. Within the above ranges, the dispersion stability of the functionalizing agent in the aqueous solvent is good.

The amount of the functionalizing agent used is preferably 50 parts by mass or less, more preferably 40 parts by mass or less, and still more preferably 30 parts by mass or less, per 100 parts by mass of the polymer fine particles. When the amount is 50 parts by mass or less, the formability of the polymer fine particles is good.

The aqueous solvent dispersion liquid of polymer fine particles may contain an additive, such as a fusing agent, a softening agent, or an interparticle crosslinking agent as an optional component. When at least one selected from the group consisting of a fusing agent, a softening agent, and an interparticle crosslinking agent is used, the formability of the polymer fine particles can be improved.

The aqueous solvent dispersion liquid of polymer fine particles may contain an unreacted monomer, a polymer which is not incorporated into the polymer fine particles, and a surfactant, a polymerization initiator, and the like which are optionally used in the method for producing a polymer fine particle dispersion described below.

In one embodiment, the dispersion medium is air. In this embodiment, the polymer fine particle dispersion is provided as a powder of polymer fine particles.

Method for producing polymer fine particle dispersion from monomer

The method for producing the polymer fine particle dispersion is not particularly limited. Examples thereof include a method in which a monomer is polymerized in an aqueous solvent to obtain an aqueous solvent dispersion liquid of polymer fine particles, and the obtained dispersion liquid is purified as necessary to obtain a polymer fine particle dispersion.

Examples of the polymerization method include emulsion polymerization, soap-free emulsion polymerization, suspension polymerization, dispersion polymerization, microemulsion polymerization, miniemulsion polymerization, and microsuspension polymerization. Emulsion polymerization and soap-free emulsion polymerization are preferable from the viewpoint of easy size control of the polymer fine particles.

When the monomer is polymerized, at least one selected from the group consisting of a surfactant, a polymerization initiator, a crosslinking agent, and an inorganic salt can be used as necessary.

Examples of the surfactant include, but are not particularly limited to, an anionic surfactant, a cationic surfactant, a nonionic surfactant, and an amphoteric surfactant.

Examples of the anionic surfactant include sodium oleate, sodium lauryl sulfate, sodium dodecylbenzenesulfonate, sodium alkylsulfonate, sodium polyoxyethylene alkyl ether sulfate, and potassium salts, calcium salts, alkylnaphthalenesulfonates, and alkyl phosphate esters corresponding thereto.

Examples of the cationic surfactant include alkylamine salts, such as laurylamine acetate and stearylamine acetate; and quaternary ammonium salts, such as lauryltrimethylammonium chloride.

Examples of the nonionic surfactant include polyoxyethylene alkylether, polyoxyethylene alkylphenyl ether, polyoxyethylene fatty acid ester, sorbitan fatty acid ester, polyoxyethylene sorbitan fatty acid ester, polyoxyethylene alkylamine, and glycerin fatty acid ester.

Examples of the amphoteric surfactant include lauryldimethylamine oxide.

The surfactant can be appropriately selected depending on the type of the monomer to be used, the polymerization method, and the like. In a case where the (meth)acrylic polymer or the poly(meth)acrylamide is produced by emulsion polymerization, the surfactant is preferably an anionic surfactant, and more preferably sodium dodecylbenzenesulfonate.

The surfactant may be used alone or in combination of two or more thereof in any ratio.

The amount of the surfactant used is preferably from 0.0001 to 10 parts by mass, more preferably from 0.001 to 8 parts by mass, and still more preferably from 0.01 to 5 parts by mass, per 100 parts by mass of the monomer. Within the above ranges, the size of the obtained polymer fine particles is appropriate.

In a case where a radical polymerizable monomer is used, a polymerization initiator is preferably used. Examples of the polymerization initiator include, but are not limited to, persulfates, such as potassium persulfate, ammonium persulfate, and sodium persulfate; organic peroxides, such as benzoyl peroxide, lauroyl peroxide, o-chlorobenzoyl peroxide, o-methoxybenzoyl peroxide, 3,5,5-trimethylhexanoyl peroxide, tert-butyl peroxy-2-ethylhexanoate, di-tert-butyl peroxide, cumene hydroperoxide, and t-butyl hydroperoxide; and azo compounds, such as 2,2'-azobis[2-(2-imidazolin-2-yl)propane], 2,2'-azobis(2-methylpropionamidine), 2,2'-azobis[N-(2-carboxyethyl)-2-methylpropionamidine], 2,2'-azobis[2-methyl-N-(2-hydroxyethyl)propionamide], and 4,4'-azobis(4-cyanovaleric acid). Among them, persulfates are preferable, and potassium persulfate is more preferable. The polymerization initiator may be used alone or in combination of two or more thereof in any ratio.

The amount of the polymerization initiator used is preferably from 0.05 to 15 parts by mass, and more preferably from 0.5 to 12 parts by mass or more, per 100 parts by mass of the monomer.

The crosslinking agent is not particularly limited as long as it is a compound having two or more functional groups having reactivity with the monomer. In a case where a radical polymerizable monomer is used, examples of the crosslinking agent include ethylene glycol di(meth)acrylate, 1,4-butanediol di(meth)acrylate, neopentyl glycol di(meth)acrylate, 1,6-hexanediol di(meth)acrylate, trimethylolpropane tri(meth)acrylate, nonanediol di(meth)acrylate, pentaerythritol tetra(meth)acrylate, dipentaerythritol hexa(meth)acrylate, 1,4-cyclohexanediol di(meth)acrylate, and dicyclopentenyloxyethyl (meth)acrylate. Among them, ethylene glycol di(meth)acrylate and 1,6-hexanediol di(meth)acrylate are preferable. Examples of the crosslinking agent also include rotaxane having two or more polymerizable unsaturated groups. The rotaxane contains a cyclic molecule, a linear molecule included in the cyclic molecule in a skewered manner, and a bulky terminal group for preventing the cyclic molecule from being detached from the linear molecule. At least one of the cyclic molecule and the linear molecule may have two or more polymerizable unsaturated groups, and preferably both the cyclic molecule and the linear molecule have polymerizable unsaturated groups. The rotaxane having two or more polymerizable unsaturated groups can be obtained, for example, by reacting a compound having a functional group having reactivity with a functional group of the rotaxane and a polymerizable unsaturated group with rotaxane. For example, in a case where the functional group of the rotaxane is a hydroxy group, a compound having an isocyanato group and a polymerizable unsaturated group, such as 2-isocyanatoethyl (meth)acrylate, can be used. Examples of the polymerizable unsaturated group include a vinyl group and a (meth)acrylic group. As the rotaxane having a hydroxy group, SH2400P and SH1300P (both available from ASM Inc.) can be used.

The crosslinking agent may be used alone or in combination of two or more thereof in any ratio.

The amount of the crosslinking agent used is preferably from 0.001 to 50 parts by mass, and more preferably from 0.001 to 25 parts by mass, per 100 parts by mass of the monomer.

The inorganic salt is used for the purpose of regulating separation (dispersion) stability of the emulsion and the polymer fine particles. Specific examples of the inorganic salt include sodium chloride, sodium bromide, sodium iodide, sodium carbonate, sodium sulfate, sodium thiosulfate, sodium dihydrogen phosphate, sodium nitrate, sodium perchlorate, sodium thiocyanate, potassium chloride, potassium bromide, potassium iodide, potassium carbonate, potassium sulfate, potassium thiosulfate, potassium dihydrogen phosphate, potassium nitrate, potassium perchlorate, potassium thiocyanate, and magnesium sulfate. The inorganic salt may be used alone or in combination of two or more thereof in any ratio.

The amount of the inorganic salt used is preferably from 0.0001 to 10 parts by mass, and more preferably from 0.01 to 5 parts by mass, per 100 parts by mass of the monomer. When the amount of the inorganic salt used is 0.0001 parts by mass or more, the separation (dispersion) stability derived from the inorganic salt is easily regulated. When the amount of the inorganic salt used is 10 parts by mass or less, the polymer fine particles do not aggregate and the size of the obtained polymer fine particles is appropriate.

The temperature and time of the polymerization reaction can be appropriately selected depending on the monomer to be used, the polymerization method, the polymerization initiator, and the like. For example, in a case where emulsion polymerization or soap-free emulsion polymerization is performed using at least one selected from the group consisting of (meth)acrylate, (meth)acrylamide, and (meth)acrylamide derivatives as a monomer, the temperature and time of the reaction are preferably in ranges from 25 to 90°C and from 5 to 36 hours, and more preferably in ranges from 60 to 80°C and from 10 to 24 hours.

In the embodiment in which the dispersion medium is an aqueous solvent, the aqueous solvent dispersion liquid of the polymer fine particles obtained by the polymerization reaction may be directly formed to produce a formed body. However, from the viewpoint of enhancing the quality of the formed body, it is preferable to obtain a polymer fine particle dispersion (aqueous solvent dispersion liquid of polymer fine particles) by performing purification operations, such as centrifugation, filtration, and dialysis, and as necessary, re-dispersing the polymer fine particles in the aqueous solvent.

In the embodiment in which the dispersion medium is an aqueous solvent, optional components, such as a functionalizing agent and an additive can be added to the aqueous solvent dispersion liquid of the polymer fine particles, as necessary.

In the embodiment in which the dispersion medium is air, the polymer fine particle dispersion liquid obtained by the polymerization reaction is purified by purification operations, such as centrifugation and dialysis as necessary, and then the solvent is removed, whereby a polymer fine particle dispersion (a powder of polymer fine particles) can be obtained. The method for removing the solvent is not particularly limited, and examples thereof include freeze-drying.

Method for producing formed body of polymer fine particles

The formed body of the polymer fine particles can be produced, for example, by using the polymer fine particle dispersion.

Examples of the method for producing a formed body using a dispersion liquid of polymer fine particles include a method for volatilizing a solvent as a dispersion medium. Specifically, the dispersion liquid of the polymer fine particles is applied or sprayed onto a substrate or placed in a mold, and then the solvent is volatilized, whereby the formed body of the polymer fine particles can be obtained. The method for volatilizing the solvent is not particularly limited, and specific examples thereof include a method in which the solvent is volatilized under atmospheric pressure or reduced pressure while heating as necessary.

Examples of the method for producing a formed body using a powder of polymer fine particles include a method in which a powder of polymer fine particles is heat-pressed. Specifically, a formed body can be obtained by placing a powder of the polymer fine particles in a mold and heating and pressurizing the powder.

The temperature during heat-pressing can be appropriately set in a range that exceeds the glass transition temperature (Tg) of the polymer constituting the polymer fine particles and does not melt the polymer fine particles. For example, in a case where the polymer fine particles are polymethyl methacrylate, the temperature during heat-pressing is preferably from 100 to 200°C, and more preferably from 100 to 150°C.

The pressure during heat-pressing can be appropriately set within a range in which the polymer fine particles are not broken. The pressure during heat-pressing is, for example, from 0.2 to 100 MPa, or from 0.3 to 50 MPa.

The obtained polymer fine particle formed body may be further annealed. When the polymer fine particle formed body is annealed, the degree of 0102 of the polymer chains among the polymer fine particles can be increased, that is, the interface thickness can be increased.

The annealing temperature and time are not particularly limited, and can be appropriately set depending on the type of the polymer constituting the polymer fine particles, the glass transition temperature (Tg), and the like. For example, in a case where the polymer constituting the polymer fine particles is polymethyl acrylate, the temperature is preferably from 25 to 200°C, in a case where the polymer constituting the polymer fine particles is polymethyl methacrylate, the temperature is preferably from 100 to 200°C, and in a case where the polymer constituting the polymer fine particles is poly(N-isopropylacrylamide), the temperature is preferably from 33 to 200°C. The annealing time depends on the temperature, but is usually from 1 to 200 hours.

Polymer Fine Particle Formed Body

A polymer fine particle formed body according to one embodiment, i.e., a polymer fine particle formed body made of polymer fine particles, is a polymer fine particle formed body in which 80 mol% or more of monomers constituting the polymer is at least one monomer selected from the group consisting of a polyalkylene glycol (meth)acrylate, an alkoxy group-containing methacrylate, an acrylate containing an alkoxy group having 2 or more carbon atoms, (meth)acrylamide, and derivatives thereof. (These are also referred to as a polymer fine particle formed body composed of a specific monomer.) At least one monomer selected from the group consisting of a polyalkylene glycol (meth)acrylate, an alkoxy group-containing methacrylate, an acrylate containing an alkoxy group having 2 or more carbon atoms, (meth)acrylamide, and derivatives thereof preferably accounts for 90 mol% or more, more preferably 95 mol% or more, and still more preferably 99 mol% or more of the monomers constituting the polymer. 100 mol% of the monomers constituting the polymer may be at least one monomer selected from the group consisting of a polyalkylene glycol (meth)acrylate, an alkoxy group-containing methacrylate, an acrylate containing an alkoxy group having 2 or more carbon atoms, (meth) acrylamide, and derivatives thereof.

In one embodiment, the polymer fine particle formed body composed of the specific monomer is a formed body in which the polymer fine particles are bonded to each other by entanglement of polymer chains among the polymer fine particles. The formed body formed by such features has features of the polymer itself such as toughness.

The polymer fine particle formed body composed of the specific monomer is a novel formed body from which polymer fine particles can be easily produced by subjecting the formed body of polymer fine particles to the method for producing polymer fine particles from a formed body of polymer fine particles according to the present invention. This is preferable in that it is possible to be decomposed, recovered, and reused easily as polymer fine particles, as compared with a polymer obtained by polymerizing each monomer by a known general method.

Examples of the derivative of the above-described monomer include a compound substituted with one or two or more substituents as long as it does not depart from the gist of the present invention. Examples of the substituents include, but are not limited to, a hydroxy group, a tiol group, a carboxy group, a nitro group, and a cyano group; halogen atoms, such as a fluorine atom, a chlorine atom, a bromine atom, and an iodine atom; alkyl groups, such as a methyl group, an ethyl group, a propyl group, an isopropyl group, an n-butyl group, ab iso-butyl group, a tert-butyl group, a sec-butyl group, a pentyl group, an iso-pentyl group, a neopentyl group, a hexyl group, a heptyl group, an octyl group, a decyl group, and a nonyl group; alkenyl groups, such as an ethenyl group, a propenyl group, an allyl group, a butenyl group, a pentenyl group, a hexenyl group, a heptenyl group, and an octenyl group; alkynyl groups, such as a propargyl group; cycloalkyl groups, such as a cyclopropyl group, a cyclobutyl group, a cyclopentyl group, a cyclohexyl group, a cycloheptyl group, a bicyclooctyl group, and a spirooctyl group; alkoxy groups, such as a methoxy group, an ethoxy group, a propoxy group, a butoxy group, a sec-butoxy group, and a tert-butoxy group; aryl groups, such as a phenyl group, a benzyl group, a tolyl group, a naphthyl group, an anthracenyl group; aryloxy groups, such as a phenyloxy group, a benzyloxy group, and a naphthyloxy group; acyl groups, such as an acetyl group, a propionyl group, a benzoyl group, a p-methoxybenzoyl group, and a cinnamoyl group; unsubstituted amino groups, and substituted amino groups, such as a dimethyl amino group, a benzyl amino group, and a triphenylmethyl amino group; heterocyclic group, such as a furanyl group, a thiophenyl group, a pyranyl group, a pyrrolinyl group, a pyrrolyl group, 2,3-dihydro-1H-pyrrolyl group, a piperidinyl group, a piperadinyl group, a homopiperadinyl group, a morpholino group, a thiomorpholino group, a 1,2,4,6-terahydropyridyl group, a hexahydropyrimidyl group, a hxahydropyridazyl group, a 1,2,4,6-tetrahydropyridyl group, a 1,2,4,6-tetrahydropyridazyl group, a 3,4-dihydropyridyl group, an imidazolyl group, a 4,5-dihydro-1H-imidazolyl group, 2,3-dihydro-1H-imidazolyl group, a pyrazolyl group, 4,5-dihydro-1H-pyrazolyl group, 2,3-dihydro-1H-pyrazolyl group, an oxazolyl group, 4,5-dihydro-1,3-oxazolyl group, 2,3-dihydro-1,3-oxazolyl group, a 2,5-dihydro-1,3-oxazolyl group, a thiazolyl group, 4,5-dihydro-1,3-thiazolyl group, a 2,3-dihydro-1,3-thiazolyl group, a 2,5-dihydro-1,3-thiazolyl group, and a carbazolyl group; heterocyclic oxy groups, such as a furanyloxy group, a pyrrolyloxy group, an indolyloxy group, and a quinolyloxy group; and groups obtained by substituting the above groups with one or two or more substituents (e.g., halogen groups).

Specific examples of the polyalkylene glycol (meth)acrylate include ethoxydiethylene glycol (meth)acrylate, butoxydiethylene glycol (meth)acrylate, methoxydipropylene glycol (meth)acrylate, methoxytripropylene glycol (meth) acrylate, methoxypolyethylene glycol (meth)acrylate, polyethylene glycol (meth)acrylate, polypropylene glycol (meth) acrylate, poly(ethylene glycol-tetramethylene glycol) (meth)acrylate, poly(propylene glycol-tetramethylene glycol) (meth) acrylate, and polyethylene glycol-polypropylene glycol (meth)acrylate.

Specific examples of the alkoxy group-containing (meth)acrylate include 2-methoxyethyl (meth)acrylate, 2-ethoxyethyl (meth)acrylate, 2-propoxyethyl (meth)acrylate, and 2-cyclohexyloxyethyl (meth)acrylate.

Specific examples of the acrylate containing an alkoxy group having 2 or more carbon atoms include 2-ethoxyethyl acrylate, 2-propoxyethyl acrylate, and 2-cyclohexyloxyethyl acrylate.

Specific examples of the (meth)acrylamide and derivatives thereof include (meth)acrylamide, N-substituted (meth)acrylamide, and N,N-disubstituted (meth)acrylamide. Specific examples of the substituent of the (meth)acrylamide derivative include alkyl groups, such as a methyl group, an ethyl group, an n-propyl group, an isopropyl group, and a tert-butyl group; cyclic alkyl groups, such as a cyclopropyl group; aryl groups, such as a phenyl group; and a benzyl group. In the N,N-disubstituted (meth)acrylamide, substituents may be bonded to form a ring structure. Specific examples of the (meth)acrylamide derivative include N,N-dimethyl (meth)acrylamide, N,N-diethyl (meth)acrylamide, N-n-propyl (meth)acrylamide, N-isopropyl (meth)acrylamide, N-tert-butyl (meth)acrylamide, N-cyclopropyl (meth)acrylamide, acryloyl morpholine, and N-benzyl (meth)acrylamide.

Among them, polyalkylene glycol (meth)acrylate containing a diethylene glycol unit, alkoxyethyl methacrylate in which the number of carbon atoms of the alkoxy group is from 1 to 3, alkoxyethyl acrylate in which the number of carbon atoms of the alkoxy group is from 2 to 3, and N-substituted (meth)acrylamide are preferable, and 2-(2-methoxyethoxy) ethyl (meth)acrylate, ethoxydiethylene glycol (meth)acrylate, 2-methoxyethyl methacrylate, 2-ethoxyethyl (meth)acrylate, and N-isopropyl (meth)acrylamide are more preferable because the glass transition temperature (Tg) of the obtained polymer is appropriate and forming and decomposition are easy.

Examples of the other monomer constituting the polymer include linear or branched alkyl (meth)acrylate, cyclic alkyl (meth)acrylate, methoxy group-containing acrylate, hydroxy group-containing (meth)acrylate, aromatic group-containing (meth)acrylate, amino group-containing (meth)acrylate, aryloxyethyl (meth)acrylate, (meth)acrylic acid, itaconic acid, crotonic acid, maleic acid, fumaric acid, acrylonitrile, styrene, p-methylstyrene, $\alpha$-methylstyrene, vinyl acetate, vinyl chloride, and rotaxane having one polymerizable unsaturated group. Among them, linear or branched alkyl (meth)acrylates and methoxy group-containing acrylates are preferable, linear or branched alkyl (meth)acrylates in which the number of carbon atoms of the alkyl group is 1 to 4 and methoxyethyl acrylate are more preferable, and methyl (meth)acrylate and methoxyethyl acrylate are still more preferable. In one embodiment, the monomer constituting the polymer includes no rotaxane having one polymerizable unsaturated group.

The polymer constituting the polymer fine particles composed of the specific monomer may have a crosslinked structure or may have no crosslinked structure. The crosslinking agent that imparts a crosslinked structure to the polymer is not particularly limited as long as it is a compound having two or more functional groups having reactivity with the monomer constituting the polymer. Examples of the crosslinking agent include ethylene glycol di(meth)acrylate, 1,4-butanediol di(meth)acrylate, neopentyl glycol di(meth)acrylate, 1,6-hexanediol di(meth)acrylate, trimethylolpropane tri(meth)acrylate, nonanediol di(meth)acrylate, pentaerythritol tetra(meth)acrylate, dipentaerythritol hexa(meth)acrylate, 1,4-cyclohexanediol di(meth)acrylate, and dicyclopentenyloxyethyl (meth)acrylate. Among them, ethylene glycol di(meth)acrylate and 1,6-hexanediol di(meth)acrylate are preferable. Examples of the crosslinking agent also include rotaxane having two or more polymerizable unsaturated groups. Examples of the polymerizable unsaturated group include a vinyl group and a (meth)acrylic group.

In one embodiment, the polymer fine particle formed body composed of the specific monomer contains no structure derived from rotaxane. The polymer fine particle formed body which contains no structure derived from rotaxane is preferable in that it is advantageous in terms of production cost.

The shape of the polymer fine particle formed body composed of the specific monomer is not particularly limited. The polymer fine particle formed body may be a coating film formed on a substrate, or may be a self-standing formed body, such as a self-standing film. In addition, by using an appropriate mold, a formed body having an arbitrary shape can be obtained. In a case where a sheet-shaped formed body is produced, the thickness thereof is usually from 10 nm to 1 cm.

The polymer fine particle formed body composed of the specific monomer may contain a functionalizing agent. The functionalizing agent is the same as that contained in the polymer fine particle dispersion. In a case where the polymer fine particle dispersion containing the functionalizing agent is used to produce the polymer fine particle formed body to be used in the present invention, the function of the functionalizing agent is usually imparted to the formed body.

The content of the functionalizing agent in the formed body is preferably 50 parts by mass or less, more preferably 40 parts by mass or less, and still more preferably 30 parts by mass or less, per 100 parts by mass of the polymer fine particles.

In one embodiment, the polymer fine particle formed body composed of the specific monomer is a formed body in which the polymer fine particles are bonded to each other by entanglement of polymer chains among the polymer fine particles. In this case, at the interface among the polymer fine particles, the polymer chains penetrate each other, and thus the interface has a certain thickness (interface thickness). In this embodiment, the interface thickness among the polymer fine particles is, for example, from 2.5 to 5.0 nm, from 2.8 to 4.8 nm, or from 3.0 to 4.5 nm. Although it is not bound by any theory, the density of polymer chains is lower near the surface of a polymer fine particle than in the center portion of the fine particle, and the polymer chains easily move. Thus, during forming, polymer chains present on the surfaces of adjacent polymer fine particles are entangled with each other, whereby the polymer fine particles are bonded to each other to form a formed body. Examples of means for promoting formation of entanglement of polymer chains include annealing the formed body and adding a small amount of an organic solvent, that is, to the extent that does not dissolve the polymer fine particles, to the aqueous solvent dispersion liquid of the polymer fine particles. It is considered that these means allow the polymer chains on the surface of the polymer fine particles to be easily movable. As the organic solvent, an organic solvent having high affinity with the polymer constituting the polymer fine particles is preferably used. Preferable examples of the organic solvent include N,N-dimethylformamide.

Method for Producing Polymer Fine Particles from Formed Body of Polymer Fine Particles

A method for producing polymer fine particles according to one embodiment comprises applying an external stimulus to a formed body of polymer fine particles to decompose the formed body into polymer fine particles. The formed body of the polymer fine particles can be produced by the same method as the above-described method for producing the formed body of the polymer fine particles. Note that the formed body that can be used in the method for producing polymer fine particles from a formed body of polymer fine particles is not limited to the polymer fine particle formed body composed of the specific monomer. In the formed body of the polymer fine particles, particle properties of the raw material polymer fine particles are not completely lost. Accordingly, the formed body can be decomposed into polymer fine particles by applying an external stimulus.

Examples of the method for applying an external stimulus to the formed body of the polymer fine particles include swelling the polymer fine particles constituting the formed body with a solvent. Although it is not bound by any theory, in the formed body of polymer fine particles, the polymer fine particles are bonded to each other by entanglement of polymer chains on the surface thereof while maintaining a certain degree of particle properties. When a solvent is added as an external stimulus to the formed body of the polymer fine particles, the solvent enters between entangled polymer chains, and the entanglement of the polymer chains is released. As a result, the formed body is decomposed into polymer fine particles.

The solvent is not particularly limited as long as it can swell the polymer fine particles constituting the formed body. Examples thereof include water, aqueous solvents, and organic solvents. Among them, a solvent having high affinity for the polymer constituting the polymer fine particles is preferably used. The solvent may be used alone or in combination of two or more thereof in any ratio.

Specifically, the solvent can be selected based on, for example, a chemical structure of the polymer constituting the polymer fine particles, Hansen solubility parameters, and the like.

The Hansen solubility parameters (HSP values) are obtained by dividing a solubility parameter (SP value) proposed by Hildebrand into three components of a dispersion term ($\delta_D$), a polar term ($\delta_P$), and a hydrogen bond term ($\delta_H$) and representing the three components in a three-dimensional space. The Hansen solubility parameters (HSP values) express solubility as three-dimensional vectors, and in general, the solubility is high when the vectors are similar to each other. The distance Ra between the HSP values of the polymer and the HSP values of the solvent is calculated by the following equation.

$$\mathbf{Ra} = (4(\delta_{D2} - \delta_{D1})^2 + (\delta_{P2} - \delta_{P1})^2 + (\delta_{H2} - \delta_{H1})^2)^{1/2}$$

$\delta_{D1}$: dispersion term of solvent, $\delta_{D2}$: dispersion term of polymer, $\delta_{P1}$: polarity term of solvents, $\delta_{P2}$: polarity term of polymer, $\delta_{H2}$: hydrogen-bonding term of solvent, $\delta_{H1}$: hydrogen-bonding term of polymer

When the distance Ra is small, it indicates that interactions between molecules are similar to each other, which is used as an index of the swelling tendency of the polymer. The HSP values can be determined, for example, from the presence or absence of dissolution or swelling in a solvent having known HSP values. The HSP values can also be estimated from the structural formula and calculated using, for example, software (HSPiP ver. 4.1.07).

Examples of the solvent include at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms, and $R^2$ is an alkyl group having from 1 to 3 carbon atoms.

Examples of the alcohol having from 2 to 6 carbon atoms include ethanol, propanol, butanol, and pentanol.

Examples of the ketone having from 3 to 5 carbon atoms include acetone and ethyl methyl ketone.

Examples of the aromatic hydrocarbon having from 6 to 10 carbon atoms include benzene, toluene, and xylene.

Examples of the ester represented by the formula $R^1COOR^2$ where $R^1$ is hydrogen or an alkyl group having from 1 to 3 carbon atoms, and $R^2$ is an alkyl group having from 1 to 3 carbon atoms include methyl acetate, ethyl acetate, propyl acetate, methyl butyrate, and ethyl butyrate.

In a case where the polymer fine particles are (meth)acrylic polymer fine particles or poly(meth)acrylamide fine particles, the solvent preferably contains at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms, and $R^2$ is an alkyl group having from 1 to 3 carbon atoms, more preferably contains at least one selected from the group consisting of N,N-dimethylformamide, alcohols having from 2 to 5 carbon atoms, acetone, ethyl methyl ketone, and aromatic hydrocarbons having from 6 to 10 carbon atoms, and still more preferably contains at least one selected from N,N-dimethylformamide, alcohols having from 2 to 5 carbon atoms, acetone, and toluene.

In a case where the solvent contains at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms and $R^2$ is an alkyl group having from 1 to 3 carbon atoms, the solvent contains these solvents of, for example, from 50 to 100 mass%, from 60 to 95 mass%, or from 70 to 90 mass% in total. The solvent may further contain at least one selected from the group consisting of water and other organic solvents.

Method for Recycling Polymer Fine Particles

A method for recycling polymer fine particles according to one embodiment comprises a step (A) of applying an external stimulus to a first polymer fine particle formed body obtained by forming first polymer fine particles to decompose the first polymer fine particle formed body into second polymer fine particles. The second polymer fine particles obtained in the step (A) can be reused.

As the first polymer fine particles, the polymer fine particles utilized in the present invention described above can be used. As application of an external stimulus to the first polymer fine particle formed body, the same method as the method for applying an external stimulus in the above-described method for producing polymer fine particles from the formed body of polymer fine particles can be used.

The first polymer fine particle formed body can be produced by the same method as the method for producing the formed body of polymer fine particles. Note that the formed body that can be used in the method for recycling polymer fine particles is not limited to the formed body of polymer fine particles composed of the specific monomer.

The average particle size of the first polymer fine particles before forming is preferably from 50 nm to 5 $\mu$m, more preferably from 60 nm to 1500 nm, and still more preferably from 70 nm to 1200 nm.

The change ratio between the average particle size of the first polymer fine particles before forming and the average particle size of the second polymer fine particles after decomposition (difference between the average particle size (nm) of the first polymer fine particles and the average particle size (nm) of the second polymer fine particles/average particle size (nm) of the first polymer fine particles $\times$ 100) (%) is preferably 15% or less, more preferably 10% or less, still more preferably 8% or less, and still even more preferably 5% or less. In the method for recycling polymer fine particles according to one embodiment, forming and decomposition of a formed body are performed by reversible formation and elimination of entanglement of polymer chains among polymer fine particles, and thus the quality of the polymer fine particles is not substantially changed. That is, the second polymer fine particles have properties similar to those of the first polymer fine particles.

The ratio of the total mass of the second polymer fine particles obtained after the decomposition to the total mass of the first polymer fine particles used for the forming of the first polymer fine particle formed body is preferably 0.95 or more, more preferably 0.97 or more, and still more preferably 0.99 or more. In the method for recycling polymer fine particles according to one embodiment, forming and decomposition of a formed body are performed by reversible formation and elimination of entanglement of polymer chains among polymer fine particles, and thus the quality of the polymer fine particles is not substantially changed and a high recovery rate can be obtained.

In a case where the first polymer fine particle formed body contains the functionalizing agent as described below, the ratio of the total mass of the second polymer fine particles obtained after the decomposition to the total mass of the first polymer fine particles used for the forming of the first polymer fine particle formed body is not particularly limited, but is preferably 0.70 or more. This is because a separation step of the second polymer fine particles and the functionalizing agent may be performed.

The method for recycling polymer fine particles according to one embodiment further comprises a step (B) of forming the second polymer fine particles obtained in the aforementioned step (A) to produce a second polymer fine particle formed body.

The forming in the step (B) can be performed using, for example, a second polymer fine particle dispersion in which the second polymer fine particles are dispersed in a dispersion medium. Specifically, it can be performed by the same method as the method for producing the formed body of the polymer fine particles described above.

In an embodiment in which the dispersion medium is a solvent, optional components, such as a functionalizing agent and an additive can be added to the second polymer fine particle dispersion, as necessary.

In the step (A), in a case where the polymer fine particles are swollen with a solvent to decompose the first polymer fine particle formed body into the second polymer fine particles, a dispersion liquid of the second polymer fine particles is obtained. In this case, the obtained dispersion liquid of the second polymer fine particles may be directly formed to produce the second polymer fine particle formed body, but from the viewpoint of enhancing the quality of the formed body, it is preferable to obtain the second polymer fine particle dispersion by performing purification operations, such as centrifugation, filtration, and dialysis, and as necessary, re-dispersing the second polymer fine particles in a solvent. In an embodiment in which the dispersion medium is air, the dispersion liquid of the second polymer fine particles obtained in the step (A) is purified by purification operations, such as centrifugation and dialysis as necessary, and then the solvent is removed, whereby it is possible to obtain the second polymer fine particles dispersion. The method for removing the solvent is not particularly limited, and examples thereof include freeze-drying.

In one embodiment, the second polymer fine particle formed body is also a formed body in which polymer fine particles are bonded to each other by entanglement of polymer chains among the polymer fine particles. Similarly to the above, the interface thickness among the polymer fine particles is, for example, from 2.5 to 5.0 nm, from 2.8 to 4.8 nm, or from 3.0 to 4.5 nm.

Further, the step (B) may include an annealing step of the second polymer fine particle formed body.

The shape of the second polymer fine particle formed body is not particularly limited. The second polymer fine particle formed body may be a coating film formed on a substrate, or may be a self-standing formed body, such as a self-standing film.

In one embodiment, the step (B) does not comprise a dissolving or melting step of the second polymer fine particles.

The method for recycling polymer fine particles according to one embodiment further comprises performing the step (A) above again using the second polymer fine particle formed body obtained in the aforementioned step (B) as the first polymer fine particle formed body in the aforementioned step (A). By repeating the steps (A) and (B) in this manner, the polymer fine particles can be repeatedly used.

The first polymer fine particle formed body may contain the functionalizing agent. In a case where the first polymer fine particle formed body contains a functionalizing agent, the method for recycling polymer fine particles may further comprises separating the second polymer fine particles and the functionalizing agent after the step (A). The method for separating the second polymer fine particles and the functionalizing agent is not particularly limited, and can be performed using a known method. Specific examples include centrifugation, filtration, and dialysis. By performing the separation step, the second polymer fine particles and the functionalizing agent can be recovered respectively and separately reused. In general, it is difficult to separate and recover the polymer from the formed body containing the functionalizing agent, but in the method for recycling the polymer fine particles, the particle properties of the polymer fine particles are maintained to some extent in the formed body, and thus the polymer fine particles and the functionalizing agent can be separated by a simple operation, such as centrifugation or dialysis.

Closed-Loop Recycling Method of Polymer Fine Particles

Hereinafter, a more specific aspect of the above-described method for recycling polymer fine particles of the present invention (herein may be referred to as a "closed-loop recycling method") will be described. However, the present aspect is merely an example of a method for recycling polymer fine particles according to the present invention, and the method for recycling polymer fine particles of the present invention is not limited to the present aspect in any sense.

The closed-loop recycling method of a polymer according to one embodiment comprises, in this order: (a) providing a polymer fine particle dispersion containing polymer fine particles and a dispersion medium, (b) forming the polymer fine particle dispersion to obtain a formed body, and (c) swelling the polymer fine particles constituting the formed body by adding a solvent as an external stimulus to the formed body and decomposing the formed body into polymer fine particles. In general, forming of a polymer is performed in a state in which a raw material, such as a pellet is dissolved in an appropriate solvent or in a state in which the raw material is heated and melted. That is, the shape of the raw material does not remain in the formed body. On the other hand, the closed-loop recycling method of a polymer using the polymer fine particles of this embodiment comprises forming a polymer fine particle dispersion containing polymer fine particles to obtain a formed body composed of the polymer fine particles. In the formed body composed of the polymer fine particles, the particle properties of the raw material polymer fine particles are not completely lost. Thus, the formed body can be decomposed into polymer fine particles by a simple operation of adding a solvent as an external stimulus, and the polymer fine particles can be recycled.

(a) Providing polymer fine particle dispersion containing polymer fine particles and dispersion medium

This is the same step as in the method for producing a polymer fine particle dispersion from a monomer.

(b) Forming polymer fine particle dispersion to obtain formed body

This is the same step as in the method for producing a formed body of polymer fine particles using the polymer fine particle dispersion.

(c) Swelling polymer fine particles constituting formed body by adding solvent as external stimulus to formed body and decomposing formed body into polymer fine particles

This is the same step as in the method for producing polymer fine particles from a formed body of polymer fine particles. That is, it is the same as the step of decomposing the first polymer fine particle formed body into the second polymer fine particles by applying an external stimulus to the first polymer fine particle formed body.

(d) Separating polymer fine particles and functionalizing agent

In an embodiment in which the polymer fine particle dispersion (aqueous solvent dispersion of polymer fine particles) contains a functionalizing agent, (d) separating the polymer fine particles and the functionalizing agent may be further performed after the step (c). The method for separating the polymer fine particles and the functionalizing agent is not particularly limited, and a known method can be used. Specific examples include centrifugation, filtration, and dialysis. By performing the step (d), the polymer fine particles and the functionalizing agent can be recovered respectively and separately reused. In general, it is difficult to separate and recover a polymer from a formed body containing a functionalizing agent, but in the closed-loop recycling method of a polymer using polymer fine particles, the particle properties of the polymer fine particles are maintained to some extent in the formed body, and thus the polymer fine particles and the functionalizing agent can be separated by a simple operation, such as centrifugation or dialysis.

Examples

Hereinafter, the present invention will be described specifically with reference to Examples and Comparative Examples. However, the present invention is not limited to these Examples.

(1) Evaluation method

Average particle size of polymer fine particles

Method for measuring average particle size (nm) of polymer fine particles

Atomic force microscope: AFM5200S available from Hitachi High-Tech Science Corporation Image analysis software: NanoNavi II (NanoNavi Station, Version 5.60 A) available from SII NanoTechnology Inc.
Measurement sample preparation method: 100 $\mu$L of a polymer fine particle aqueous dispersion liquid (0.1 mass%) was mixed with 100 $\mu$L of ethanol. This mixture (200 $\mu$L) was placed on the surface of about 20 mL of water in a glass dish. After 1 minute, a glass substrate (length 18 mm, width 18 mm, available from Matsunami Glass Ind., Ltd.) washed with a detergent and deionized water were brought into contact with the surface of water and then slowly pulled up vertically to the surface of water. The glass substrate was dried at room temperature (25°C) to obtain a measurement sample.
From an image captured by the atomic force microscope, the particle width at which the height (maximum value - minimum value) of a polymer fine particle was halved was analyzed using image analysis software, and the average value of values obtained by selecting 100 arbitrary polymer fine particles was determined.

Shape and average Krummbein diameter of polymer fine particles

Method for measuring shape and Krummbein diameter (maximum length in constant direction of projected image of particles) of polymer fine particles

Atomic force microscope: AFM5200S available from Hitachi High-Tech Science Corporation
Image Analysis Software: Image J (1.53k, Wayne Rasband, National Institutes of Health)

The average value of values obtained by selecting 100 arbitrary polymer fine particles was determined as the average Krummbein diameter. A measurement sample was obtained in the same manner as in the case of the average particle size of the polymer fine particles described above.

Average hydrodynamic diameter of polymer fine particles

An average hydrodynamic diameter ($D_h$) (nm) of the polymer fine particles was evaluated by DLS measurement using a Zetasizer Nano S (Malvern Instruments).

Measurement sample preparation method: 0.01 mass% polymer fine particle aqueous dispersion liquid was used.

Data were averaged over 30 measurements using intensity autocorrelation for an acquisition time of 30 seconds. A scattering intensity was detected at a total scattering angle of 173°. The hydrodynamic diameter of a polymer fine particle in water was calculated using the Stokes-Einstein equation. Each sample was evaluated three times according to the above procedure, and the average value of obtained hydrodynamic diameters was determined as the average hydrodynamic diameter.

Tensile characteristics

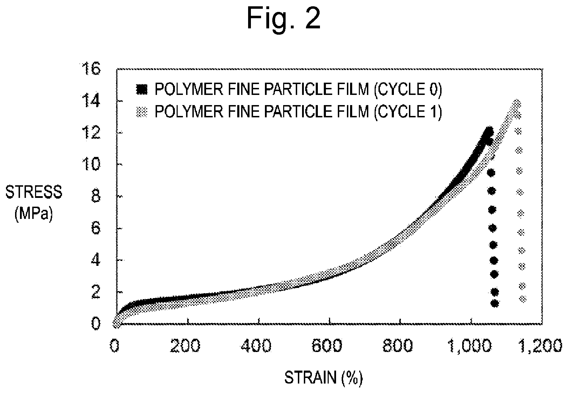

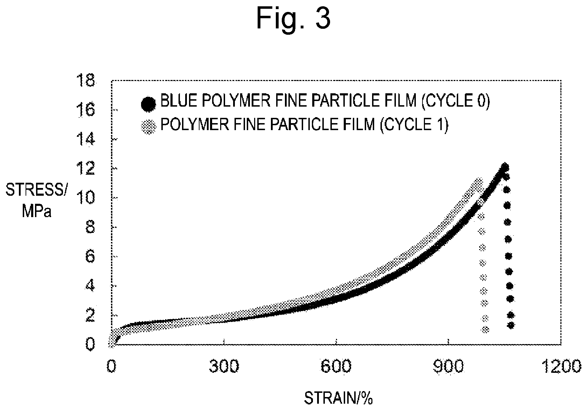

Using a test piece punching machine (Kobunshi Keiki Co., Ltd.), three test pieces (Type 4 dumbbell shape specified in ISO 37) were cut out from a polymer fine particle film or a polyMA bulk film. The thickness of each of the obtained test pieces was measured at three points using a digital micrometer (MCD130-25D, Niigata Seiki Co., Ltd.), and the average value was determined as the test piece thickness. For the three test pieces, a tensile test (STB-1225L, A&D Company, Limited) was performed using a 50N load cell to obtain a stress-strain curve. A breaking strength (MPa) and a breaking energy ($MJ/m^3$) were calculated for each test piece, and average values thereof were determined as the breaking strength and the breaking energy of the polymer fine particle film or the polyMA bulk film. Tensile test conditions were a temperature of 26 ± 0.5°C and a tensile rate of 1000 mm/min. The results are listed in Table 3 and Figs. 2 and 3.

(2) Raw materials

Raw materials used in Examples and Comparative Examples are as follows.

Methyl acrylate (MA, FUJIFILM Wako Pure Chemical Industries, Ltd.), 2-methoxyethyl methacrylate (MEMA, Tokyo Chemical Industry Co., Ltd.), 2-ethoxyethyl methacrylate (EEMA, Tokyo Chemical Industry Co., Ltd.), 2-methoxyethyl acrylate (MEA, FUJIFILM Wako Pure Chemical Industries, Ltd.), 2-(2-methoxyethoxy) ethyl methacrylate ($MEO_2MA$, Aldrich), ethoxydiethylene glycol acrylate (DEGA, Tokyo Chemical Industry Co., Ltd.), methyl methacrylate (MMA, FUJIFILM Wako Pure Chemical Industries, Ltd.), and N-isopropylacrylamide (NIPAm, FUJIFILM Wako Pure Chemical Industries, Ltd.) were used as monomers for producing the polymer fine particles.

Production Example 1: Production of polymer fine particle aqueous dispersion liquid MA-A

As a surfactant, 0.11 parts by mass of sodium dodecylbenzenesulfonate (Tokyo Chemical Industry Co., Ltd.) was dissolved in 200 parts by mass of water. The obtained solution and 34.4 parts by mass of methyl acrylate were placed in a four-necked flask equipped with a stirrer, a reflux condenser, a thermometer, and an inert gas inlet, and heated and stirred at 70°C for 30 minutes under a nitrogen gas atmosphere. To the solution, 0.0540 parts by mass of potassium persulfate (FUJIFILM Wako Pure Chemical Industries, Ltd.) (2 mM) dissolved in 5 mL of water was added, and the mixture was heated and stirred at 70°C for 1 day under a nitrogen gas atmosphere and cooled to room temperature to obtain a polymer fine particle aqueous dispersion liquid MA-A.

Production Example 2: Production of polymer fine particle aqueous dispersion liquid MA-B

In a four-necked flask equipped with a stirrer, a reflux condenser, a thermometer, and an inert gas inlet, 600 parts by mass of water and 51.6 parts by mass of methyl acrylate were placed, and heated and stirred at 70°C for 30 minutes under a nitrogen gas atmosphere. To the solution, 0.0540 parts by mass of potassium persulfate (2 mM) dissolved in 5 mL of water was added, and the mixture was heated and stirred at 70°C for 1 day under a nitrogen gas atmosphere and cooled to room temperature to obtain a polymer fine particle aqueous dispersion liquid MA-B.

Production Example 3: Production of polymer fine particle aqueous dispersion liquid MA-C

In a four-necked flask equipped with a stirrer, a reflux condenser, a thermometer, and an inert gas inlet, 600 parts by mass of water, 51.6 parts by mass of methyl acrylate, 0.15 parts by mass of 1,6-hexanediol dimethacrylate (FUJIFILM Wako Pure Chemical Industries, Ltd.), and 0.18 parts by mass of sodium chloride (Fujifilm Wako Pure Chemical Industries, Ltd.) were placed, and heated and stirred at 70°C for 30 minutes under a nitrogen gas atmosphere. To the solution, 0.1080 parts by mass of potassium persulfate (2 mM) dissolved in 10 mL of water was added, and the mixture was heated and stirred at 70°C for 1 day under a nitrogen gas atmosphere and cooled to room temperature to obtain a polymer fine particle aqueous dispersion liquid MA-C.

Production Example 4: Production of polymer fine particle aqueous dispersion liquid MA-D

As a surfactant, 1.39 parts by mass of sodium dodecylbenzenesulfonate was dissolved in 200 parts by mass of water. The obtained solution, 34.4 parts by mass of methyl acrylate, and 0.1 parts by mass of 1,6-hexanediol dimethacrylate were placed in a four-necked flask equipped with a stirrer, a reflux condenser, a thermometer, and an inert gas inlet, and heated and stirred at 70°C for 30 minutes under a nitrogen gas atmosphere. To the solution, 0.0540 parts by mass of potassium persulfate (2 mM) dissolved in 5 mL of water was added, and the mixture was heated and stirred at 70°C for 1 day under a nitrogen gas atmosphere and cooled to room temperature to obtain a polymer fine particle aqueous dispersion liquid MA-D.

Production Examples 5 to 8

Polymer fine particle aqueous dispersion liquids (polymer fine particle aqueous dispersion liquids MA-E, F, and G and polymer fine particle aqueous dispersion liquid MEO$_2$MA, respectively) were obtained in the same manner as in Production Example 4 except that compositions listed in Table 1 were used.

Production Examples 9 to 13

Polymer fine particle aqueous dispersion liquids (polymer fine particle aqueous dispersion liquids MEMA, EEMA, MEA, DEGA, and NIPAm, respectively) were obtained in the same manner as in Production Example 3 except that compositions listed in Table 1 were used. Each of the polymer fine particle aqueous dispersion liquids was placed in a mold and dried, whereby it was possible to produce a polymer fine particle film.

Production Example 14

A polymer fine particle aqueous dispersion liquid MMA was obtained in the same manner as in Production Example 2 except that a composition listed in Table 1 was used. The polymer fine particle aqueous dispersion liquid MMA was placed in a mold and dried, whereby it was possible to produce a polymer fine particle film.

Production Example 15: Preparation of blue pigment dispersion liquid

A three-necked flask was charged with 90 parts by mass of sodium hydroxide aqueous solution (sodium hydroxide concentration: 50 mM), and 10 parts by mass of MF-5460 Blue (product name) (blue pigment specified by C.I.: PB-28, Dainichiseika Color & Chemicals Mfg. Co., Ltd.) was added thereto, followed by shaking to obtain a blue pigment aqueous dispersion liquid. It was visually confirmed that there was no precipitate in the aqueous dispersion liquid.

Production Example 16: Preparation of red pigment dispersion liquid

A three-necked flask was charged with 90 parts by mass of sodium hydroxide aqueous solution (sodium hydroxide concentration: 50 mM), and 10 parts by mass of MF-5160 Brown (product name) (red pigment specified by C.I.: PR-101, Dainichiseika Color & Chemicals Mfg. Co., Ltd.) was added thereto. The mixed liquid was subjected to ultrasonic treatment using an ultrasonic homogenizer (VCX-750, Ieda Trading Corporation) at 375 W for 10 minutes in an ice bath to obtain a red pigment aqueous dispersion liquid. It was visually confirmed that there was no precipitate in the aqueous dispersion liquid.

Example 1: Production and decomposition of formed body of polyMA fine particles

Production of polymer fine particle film MA-A

The polymer fine particle aqueous dispersion liquid MA-A obtained in Production Example 1 was placed in a silicone rubber mold (length 3.5 cm, width 3.5 cm, depth 1 mm) to achieve 48 mg (polymer fine particles)/cm$^2$, and dried in a low-temperature thermostatic chamber (LTI-2100, Tokyo Rikakikai Co., Ltd.) at 25°C for 24 hours to obtain a polymer fine particle film MA-A.

Decomposition of polymer fine particle film MA-A

In a three-necked flask equipped with a stirrer, 0.5 parts by mass of the polymer fine particle film MA-A was immersed in 94 parts by mass of N,N-dimethylformamide (FUJIFILM Wako Pure Chemical Industries, Ltd.) and stirred at room temperature (25°C) for 24 hours. It was visually confirmed that the polymer fine particle film MA-A was decomposed.

Examples 2 to 7 and 14: Production and decomposition of formed body of polyMA fine particles

Polymer fine particle films (polymer fine particle films MA-A, MA-B, MA-C, and MA-G) were produced and decomposed in the same procedure as in Example 1 except that the polymer fine particle aqueous dispersion liquids and the solvent used for decomposition of the polymer fine particle films were as listed in Table 2. In Examples 2 to 7 and 14, it was visually confirmed that the polymer fine particle films (polymer fine particle films MA-A, MA-B, MA-C, and MA-G) were decomposed.

Example 8: Production and decomposition of formed body of polyMA fine particles

Production of polymer fine particle film MA-D

A polymer fine particle film MA-D was obtained in the same procedure as in Example 1 except that the polymer fine particle aqueous dispersion liquid MA-D was used instead of the polymer fine particle aqueous dispersion liquid MA-A.

Decomposition of polymer fine particle film MA-D

In a three-necked flask equipped with a stirrer, 0.5 parts by mass of the polymer fine particle film MA-D was immersed in 84 parts by mass of an 80 vol% aqueous solution of ethanol (FUJIFILM Wako Pure Chemical Industries, Ltd.) and stirred at room temperature (25°C) for 24 hours to obtain a polyMA fine particle dispersion liquid. The dispersion liquid was concentrated by a rotary evaporator to obtain a polyMA fine particle aqueous dispersion liquid. The obtained polyMA fine particle aqueous dispersion liquid was used to determine the average hydrodynamic diameter of the polyMA fine particles.

Example 9: Production and decomposition of formed body of polyMA fine particles

Production of polymer fine particle film MA-D

A polymer fine particle film MA-D was obtained in the same procedure as in Example 8.

Decomposition of polymer fine particle film MA-D

In a three-necked flask equipped with a stirrer, 0.5 parts by mass of the polymer fine particle film MA-D was immersed in 94 parts by mass of N,N-dimethylformamide, and stirred at room temperature (25°C) for 24 hours to obtain a polyMA fine particle dispersion liquid. The dispersion liquid was purified in deionized water using a dialysis membrane to obtain a polyMA fine particle aqueous dispersion liquid. The obtained polyMA fine particle aqueous dispersion liquid was used to determine the average hydrodynamic diameter of the polyMA fine particles.

Example 10: Recycling of polyMA fine particles

Production of polymer fine particle film MA-E (cycle 0)

A polymer fine particle film MA-E (cycle 0) was obtained in the same procedure as in Example 1 except that the polymer fine particle aqueous dispersion liquid MA-E was used instead of the polymer fine particle aqueous dispersion liquid MA-A. The obtained polymer fine particle film MA-E (cycle 0) was used to evaluate tensile characteristics. The results are listed in Table 3 and Fig. 2.

Decomposition of polymer fine particle film MA-E (cycle 0)

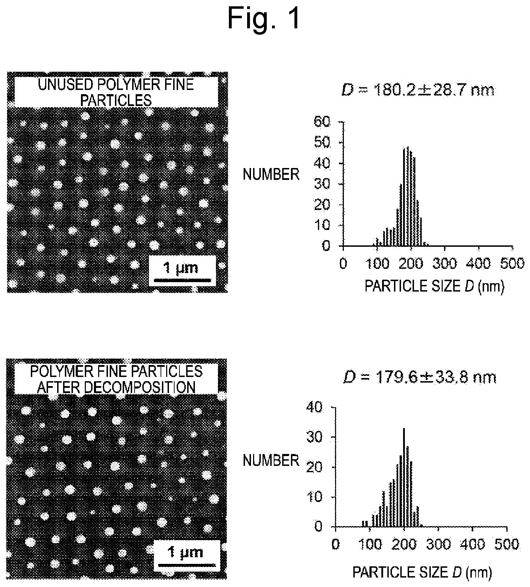

The polymer fine particle film MA-E (cycle 0) was decomposed in the same procedure as in Example 1. The obtained polyMA fine particle dispersion liquid was purified in deionized water using a dialysis membrane to obtain a polyMA fine particle aqueous dispersion liquid. The obtained polyMA fine particle aqueous dispersion liquid was used to determine the average particle size of the polyMA fine particles. In addition, the Krummbein diameter of the polyMA fine particles was also measured. The results are illustrated in Fig. 1 as polymer fine particles after decomposition.

A portion of the obtained polyMA fine particle aqueous dispersion liquid was purified by centrifugation. The mass of the polyMA fine particles contained in the dispersion liquid after the purification was measured, and the total mass of the polyMA fine particles obtained after the decomposition was calculated. Using this, a ratio of the total mass of the polyMA fine particles obtained after the decomposition to the total mass of the polyMA fine particles used for the production of the polymer fine particle film MA-E (cycle 0) was calculated. The results are listed in Table 2.

Production of polymer fine particle film MA-E (cycle 1)

A polymer fine particle film MA-E (cycle 1) was obtained in the same procedure as in Example 1 except that the polyMA fine particle aqueous dispersion liquid obtained by the decomposition of the polymer fine particle film MA-E (cycle 0) was used instead of the polymer fine particle aqueous dispersion liquid MA-A obtained in Production Example 1. The obtained polymer fine particle film MA-E (cycle 1) was used to evaluate tensile characteristics. The results are listed in Table 3 and Fig. 2.

Example 11: Production and decomposition of formed body of polyMA fine particles

A polymer fine particle film MA-E was produced and decomposed in the same procedure as in Example 1 except that the polymer fine particle aqueous dispersion liquid and the solvent used for decomposition of the polymer fine particle film were as described in Table 2. The obtained polyMA fine particle dispersion liquid was concentrated with a rotary evaporator to obtain a polyMA fine particle aqueous dispersion liquid. The obtained polyMA fine particle aqueous dispersion liquid was used to determine the average particle size of the polyMA fine particles.

A portion of the obtained polyMA fine particle aqueous dispersion liquid was purified by centrifugation. The mass of the polyMA fine particles contained in the dispersion liquid after the purification was measured, and the total mass of the polyMA fine particles obtained after the decomposition was calculated. Using this, a ratio of the total mass of the polyMA fine particles obtained after the decomposition to the total mass of the polyMA fine particles used for the production of the polymer fine particle film MA-E was calculated. The results are listed in Table 2.

Example 12: Production and decomposition of formed body of polyMA fine particles

A polymer fine particle film MA-F was produced and decomposed in the same procedure as in Example 1 except that the polymer fine particle aqueous dispersion liquid and the solvent used for decomposition of the polymer fine particle film were as described in Table 2. The obtained polyMA fine particle dispersion liquid was concentrated with a rotary evaporator to obtain a polyMA fine particle aqueous dispersion liquid. The obtained polyMA fine particle aqueous dispersion liquid was used to determine the average hydrodynamic diameter of the polyMA fine particles.

Example 13: Production and decomposition of formed body of polyMA fine particles

A polymer fine particle film MA-F was produced and decomposed in the same procedure as in Example 1 except that the polymer fine particle aqueous dispersion liquid and the solvent used for decomposition of the polymer fine particle film were as described in Table 2. The obtained polyMA fine particle dispersion liquid was purified in deionized water using a dialysis membrane to obtain a polyMA fine particle aqueous dispersion liquid. The obtained polyMA fine particle aqueous dispersion liquid was used to determine the average hydrodynamic diameter of the polyMA fine particles.

Example 15: Production and decomposition of formed body of polyMEO$_2$MA fine particles

Production of polymer fine particle film MEO$_2$MA

The polymer fine particle aqueous dispersion liquid MEO$_2$MA obtained in Production Example 8 was placed in a silicone rubber mold (length 3.5 cm, width 3.5 cm, depth 1 mm) to achieve 48 mg (polymer fine particles)/cm$^2$, and dried in a low-temperature thermostatic chamber (LTI-2100, Tokyo Rikakikai Co., Ltd.) at 25°C for 24 hours to obtain a polymer fine particle film MEO$_2$MA.

Decomposition of polymer fine particle film MEO$_2$MA

In a three-necked flask equipped with a stirrer, the polymer fine particle film MEO$_2$MA was immersed in deionized water and stirred at 10°C for 24 hours to obtain a polymer fine particle aqueous dispersion liquid MEO$_2$MA. Using the

obtained polyMEO$_2$MA fine particle aqueous dispersion liquid, the average Krummbein diameter of the polyMEO$_2$MA fine particles was determined.

Example 16: Recycling of polyMA fine particles

Production of blue polymer fine particle film MA-E (cycle 0)

In a three-necked flask equipped with a stirrer, the polymer fine particle aqueous dispersion liquid MA-E obtained in Production Example 5 and the blue pigment aqueous dispersion liquid obtained in Production Example 15 were mixed. The obtained mixed liquid (MF-5460 Blue: 10 mass%) was placed in a silicone rubber mold (length 3.5 cm, width 3.5 cm, depth 1 mm) to achieve 48 mg (polymer fine particles)/cm$^2$, and dried in a low-temperature thermostatic chamber (LTI-2100, Tokyo Rikakikai Co., Ltd.) at 25°C for 24 hours to obtain a blue polymer fine particle film MA-E (cycle 0). The obtained blue polymer fine particle film MA-E (cycle 0) was used to evaluate tensile characteristics. The results are listed in Table 3 and Fig. 3.

Decomposition of blue polymer fine particle film MA-E (cycle 0)

In a three-necked flask equipped with a stirrer, 0.5 parts by mass of the blue polymer fine particle film MA-E (cycle 0) was immersed in 84 parts by mass of an 80 vol% aqueous solution of ethanol, and stirred at room temperature (25°C) for 24 hours to obtain a polyMA fine particle dispersion liquid containing a blue pigment. This dispersion liquid was concentrated by a rotary evaporator to obtain a polyMA fine particle aqueous dispersion liquid containing a blue pigment.

Separation of polyMA fine particles and blue pigment

The obtained polyMA fine particle aqueous dispersion liquid containing a blue pigment was centrifuged and the supernatant was recovered to obtain a polyMA fine particle dispersion liquid. The obtained polyMA fine particle dispersion liquid was used to determine the average hydrodynamic diameter of the polyMA fine particles. On the other hand, the residue was redispersed in deionized water to obtain a blue pigment dispersion liquid.

Using a portion of the obtained polyMA fine particle dispersion liquid, the mass of the polyMA fine particles contained in the dispersion liquid was measured, and the total mass of the polyMA fine particles obtained after the decomposition was calculated. Using this, a ratio of the total mass of the polyMA fine particles obtained after the decomposition to the total mass of the polyMA fine particles used for the production of the blue polymer fine particle film MA-E (cycle 0) was calculated. The results are listed in Table 2.

Production of polymer fine particle film MA-E (cycle 1)

A polymer fine particle film MA-E (cycle 1) was obtained in the same procedure as in Example 1 except that the polyMA fine particle dispersion liquid obtained by separating the blue pigment was used instead of the polymer fine particle aqueous dispersion liquid MA-A obtained in Production Example 1. The obtained polymer fine particle film MA-E (cycle 1) was used to evaluate tensile characteristics. The results are listed in Table 3 and Fig. 3.

Example 17: Production and decomposition of formed body of polyMA fine particles

Production of red polymer fine particle film MA-E

A red polymer fine particle film MA-E was obtained in the same procedure as in Example 16 except that the red pigment aqueous dispersion liquid obtained in Production Example 16 was used instead of the blue pigment aqueous dispersion liquid obtained in Production Example 15.

Decomposition of red polymer fine particle film MA-E

A polyMA fine particle aqueous dispersion liquid containing a red pigment was obtained in the same procedure as in Example 16 except that the red polymer fine particle film MA-E was used instead of the blue polymer fine particle film MA-E.

Separation of polyMA fine particles and red pigment

The obtained polyMA fine particle aqueous dispersion liquid containing a red pigment was centrifuged and the supernatant was recovered to obtain a polyMA fine particle dispersion liquid. The obtained polyMA fine particle dispersion liquid was used to determine the average hydrodynamic diameter of the polyMA fine particles. On the other hand, the residue was redispersed in deionized water to obtain a red pigment dispersion liquid.

Using a portion of the obtained polyMA fine particle dispersion liquid, the mass of the polyMA fine particles contained in the dispersion liquid was measured, and the total mass of the polyMA fine particles obtained after the decomposition was calculated. Using this, a ratio of the total mass of the polyMA fine particles obtained after the decomposition to the total mass of the polyMA fine particles used for the production of the red polymer fine particle film MA-E was calculated. The results are listed in Table 2.

Example 18: Production of formed body of polyMMA fine particles

Production of polymer fine particle film MMA

The polymer fine particle aqueous dispersion liquid MMA obtained in Production Example 14 was freeze-dried to obtain a powder of polymer fine particles MMA. In a mold (Type 4 dumbbell shape specified in ISO 37), 0.80 g of the obtained powder was placed, and heat-pressed (small thermal press machine HC300-01) for 2 hours under conditions of 120°C and 20 MPa (scale pressure) to obtain a polymer fine particle film MMA. The obtained polymer fine particle film MMA is a formed body formed without using another material for bonding polymer fine particles to each other, and it is considered that it can be decomposed into polyMMA fine particles by applying an external stimulus. More specifically, it is considered that when an appropriate solvent is applied as an external stimulus, the polyMMA fine particles constituting the formed body can be swollen to decompose the formed body into polyMMA fine particles.

Reference Example 1

Production of polyMA bulk film

A mixture of 3.44 parts by mass (40 mmol) of methyl acrylate (FUJIFILM Wako Pure Chemical Industries, Ltd.), 0.01 parts by mass (0.04 mmol) of 1,6-hexanediol dimethacrylate, and 0.034 parts by mass of Irgacure (trade name) 500 (Ciba Specialty Chemicals Co., Ltd.) was injected into a mold prepared by laminating a release sheet (PET25G, LINTEC Corporation) and a glass plate in this order on each of both surfaces of a silicone rubber frame. Then, one surface of the glass plate was irradiated with ultraviolet rays for 20 minutes using an ultra-high pressure UV lamp (USH-250SC2, USHIO INC.) to perform photopolymerization reaction. The obtained photopolymerized product was purified by repeating twice an operation in which the photopolymerized product was swollen in dichloromethane and then deswollen in methanol. The purified photopolymerized product was dried at 25°C for 24 hours and then dried at 25°C under reduced pressure using a freeze dryer (FDU-1200, Tokyo Rikakikai Co., Ltd.) for 12 hours to obtain a polyMA bulk film. The obtained polyMA bulk film was used to evaluate tensile characteristics. The results are listed in Table 3.

Table 1 (Composition is in parts by mass)

| | | | Production Example 1 | Production Example 2 | Production Example 3 | Production Example 4 | Production Example 5 | Production Example 6 | Production Example 7 |
|---|---|---|---|---|---|---|---|---|---|
| Composition | Monomer | Methyl acrylate | 34.4 | 51.6 | 51.6 | 34.4 | 34.4 | 34.4 | 34.1 |
| | | 2-Methoxyethyl methacrylate | - | - | - | - | - | - | - |
| | | 2-Ethoxyethyl methacrylate | - | - | - | - | - | - | - |
| | | 2-Methoxyethyl acrylate | - | - | - | - | - | - | - |
| | | 2-(2-Methoxyethoxy) ethyl methacrylate | - | - | - | - | - | - | - |
| | | Ethoxydiethylene glycol acrylate | - | - | - | - | - | - | - |
| | | Methyl methacrylate | - | - | - | - | - | - | - |
| | | N-Isopropylacrylamide | - | - | - | - | - | - | - |
| | Crosslinking agent | 1,6-Hexanediol dimethacrylate | - | - | 0.15 | 0.1 | 0.1 | 0.1 | 1.02 |
| | | Ethylene glycol dimethacrylate | - | - | - | - | - | - | |
| | Surfactant | Sodium dodecylbenzenesulfonate | 0.11 | - | - | 1.39 | 0.07 | 0.007 | 0.07 |
| | Inorganic salt | Sodium chloride | - | - | 0.18 | - | - | - | - |
| | Solvent | Water | 200 | 600 | 600 | 200 | 200 | 200 | 200 |
| Average particle size | nm | | 178 | 625 | 1079 | 95 | 145 | 293 | 149 |
| Average Krummbein diameter | nm | | 223 | 728 | 1137 | 112 | 180 | 349 | 172 |
| Average hydrodynamic diameter | nm | | 170 | 741 | 1048 | 80 | 122 | 218 | 120 |

EP 4 582 472 A1

| Composition | | | Production Example 8 | Production Example 9 | Production Example 10 | Production Example 11 | Production Example 12 | Production Example 13 | Production Example 14 |
|---|---|---|---|---|---|---|---|---|---|
| Composition | Monomer | Methyl acrylate | - | - | - | - | - | - | - |
| | | 2-Methoxyethyl methacrylate | - | 7.14 | - | - | - | - | - |
| | | 2-Ethoxyethyl methacrylate | - | - | 7.83 | - | - | - | - |
| | | 2-Methoxyethyl acrylate | - | - | - | 6.44 | - | - | - |
| | | 2-(2-Methoxyethoxy) ethyl methacrylate | 9.3 | - | - | - | - | - | - |
| | | Ethoxydiethylene glycol acrylate | - | - | - | - | 9.32 | - | - |
| | | Methyl methacrylate | - | - | - | - | - | - | 20 |
| | | N-Isopropylacrylamide | - | - | - | - | - | 1.64 | - |
| | Crosslinking agent | 1,6-Hexanediol dimethacrylate | - | - | - | - | - | - | - |
| | | Ethylene glycol dimethacrylate | 0.29 | 0.275 | 0.275 | 0.275 | 0.275 | 0.275 | - |
| | Surfactant | Sodium dodecylbenzenesulfonate | 0.03 | - | - | - | - | - | - |
| | Inorganic salt | Sodium chloride | - | - | - | - | - | - | - |
| | Solvent | Water | 95 | 100 | 100 | 100 | 100 | 100 | 200 |
| Average particle size | nm | | - | - | - | - | - | - | - |
| Average Krummbein diameter | nm | | 253 | - | - | - | - | - | - |
| Average hydrodynamic diameter | nm | | 217 | 113 | 131 | 135 | 126 | 2049 | 417 |

Table 2

| | Polymer fine particle aqueous dispersion liquid | Pigment dispersion liquid | Solvent | Average particle size (nm) *1 | | Particle size change ratio (%) | Total mass ratio of polymer fine particles used for forming and polymer fine particles obtained after decomposition |
|---|---|---|---|---|---|---|---|
| | | | | Before forming | After decomposition | | |
| Example 1 | MA-A | - | DMF | 178 | - | - | - |
| Example 2 | MA-A | - | Acetone | 178 | - | - | - |
| Example 3 | MA-A | - | Toluene | 178 | - | - | - |
| Example 4 | MA-A | - | 80 vol% aqueous solution of ethanol | 178 | - | - | - |
| Example 5 | MA-A | - | 80 vol% aqueous solution of 1-pentanol | 178 | - | - | - |
| Example 6 | MA-B | - | DMF | 625 | - | - | - |
| Example 7 | MA-C | - | DMF | 1079 | - | - | - |
| Example 8 | MA-D | - | 80 vol% aqueous solution of ethanol | 80 | 91 | 13.8 | - |
| Example 9 | MA-D | - | DMF | 80 | 87 | 8.8 | - |
| Example 10 | MA-E | - | DMF | 145 | 143 | 1.4 | > 0.99 |
| Example 11 | MA-E | - | 80 vol% aqueous solution of ethanol | 145 | 143 | 1.4 | > 0.99 |
| Example 12 | MA-F | - | 80 vol% aqueous solution of ethanol | 218 | 221 | 1.4 | - |
| Example 13 | MA-F | - | DMF | 218 | 218 | 0.0 | - |
| Example 14 | MA-G | - | DMF | 149 | - | - | - |
| Example 15 | MEO$_2$MA | - | Water | 253 | 253 | 0.0 | - |

(continued)

| | Polymer fine particle aqueous dispersion liquid | Pigment dispersion liquid | Solvent | Average particle size (nm) *1 | | Particle size change ratio (%) | Total mass ratio of polymer fine particles used for forming and polymer fine particles obtained after decomposition |
|---|---|---|---|---|---|---|---|
| | | | | Before forming | After decomposition | | |
| Example 16 | MA-E | Blue pigment | 80 vol% aqueous solution of ethanol | 136 | 133 | 2.2 | > 0.92 |
| Example 17 | MA-E | Red pigment | 80 vol% aqueous solution of ethanol | 132 | 134 | 1.5 | > 0.73 |
| *1 Average hydrodynamic diameters for Examples 8, 9, 12, 13, 16 and 17 and average Krummbein diameter for Example 15. | | | | | | | |

Table 3

| | Formed body | Cycle | Breaking strength (MPa) | Breaking energy (MJ/m$^3$) |
|---|---|---|---|---|
| Example 10 | Polymer fine particle film MA-E | 0 | 13.9 | 54.7 |
| | Polymer fine particle film MA-E | 1 | 12.8 | 47.7 |
| Example 16 | Blue polymer fine particle film MA-E | 0 | - | - |
| | Polymer fine particle film MA-E | 1 | 9.3 | 43.5 |
| Reference Example 1 | PolyMA bulk film | - | 4.6 | 16.9 |

From the tensile characteristic evaluation of the polymer fine particle film MA-E (cycle 0) produced in Example 10 and the polyMA bulk film produced in Reference Example 1, it was indicated that the polymer fine particle film had higher breaking strength than that of the bulk film in a case of being compared at the same degree of crosslinking. From the tensile characteristic evaluation of Examples 10 and 16, it was indicated that the polymer fine particle film (cycle 1) having tensile characteristics equivalent to those of the polymer fine particle film (cycle 0) produced from unused polymer fine particles can be produced, even after forming and decomposition. From Examples 16 and 17, it was indicated that the pigment and the polymer fine particles can be separated and recovered from the polymer fine particle film containing the pigment.

Industrial Applicability

It is possible to provide a polymer recycling method applicable to various polymers by using polymer fine particles.

**Claims**

1.   A method for producing polymer fine particles,
the method comprising applying an external stimulus to a formed body of polymer fine particles to decompose the formed body into the polymer fine particles.

2.   The method according to claim 1, wherein a method for applying the external stimulus is swelling the polymer fine particles with a solvent.

3. The method according to claim 2, wherein the solvent contains at least one selected from the group consisting of N,N-dimethylformamide, N,N-dimethylacetamide, alcohols having from 2 to 6 carbon atoms, ketones having from 3 to 5 carbon atoms, aromatic hydrocarbons having from 6 to 10 carbon atoms, and esters represented by the formula $R^1COOR^2$ where $R^1$ is hydrogen or an alkyl group having from 1 to 3 carbon atoms, and $R^2$ is an alkyl group having from 1 to 3 carbon atoms.

4. The method according to any one of claims 1 to 4, wherein a polymer constituting the polymer fine particles is a (meth)acrylate-based polymer or a poly(meth)acrylamide-based polymer.

5. A polymer fine particle formed body made of fine particles of a polymer, wherein
80 mol% or more of monomers constituting the polymer is at least one monomer selected from the group consisting of a polyalkylene glycol (meth)acrylate, an alkoxy group-containing methacrylate, an acrylate containing an alkoxy group having 2 or more carbon atoms, (meth)acrylamide, and derivatives thereof.

6. The polymer fine particle formed body according to claim 5, which does not contain a structure derived from rotaxane.

7. A method for recycling polymer fine particles, the method comprising:

(A) applying an external stimulus to a first polymer fine particle formed body obtained by forming first polymer fine particles to decompose the first polymer fine particle formed body into second polymer fine particles.

8. The method for recycling polymer fine particles according to claim 7, wherein the first polymer fine particles before forming have an average particle size of from 50 nm to 5 μm.

9. The method for recycling polymer fine particles according to claim 7 or 8, wherein a change ratio between the average particle size of the first polymer fine particles before forming and an average particle size of the second polymer fine particles after decomposition is 15% or less.

10. The method for recycling polymer fine particles according to any one of claims 7 to 9, wherein a ratio of a total mass of the second polymer fine particles obtained after the decomposition to a total mass of the first polymer fine particles used for the forming is 0.95 or more.

11. The method for recycling polymer fine particles according to any one of claims 7 to 10, further comprising:
(B) forming the second polymer fine particles obtained in the step (A) to produce a second polymer fine particle formed body.

12. The method for recycling polymer fine particles according to claim 11, wherein the forming in the step (B) is performed using a second polymer fine particle dispersion in which the second polymer fine particles are dispersed in a dispersion medium.

13. The method for recycling polymer fine particles according to claim 11 or 12, further comprising performing the step (A) again using the second polymer fine particle formed body obtained in the step (B) as the first polymer fine particle formed body in the step (A).

14. The method for recycling polymer fine particles according to any one of claims 9 to 11, wherein the first polymer fine particle formed body further contains a functionalizing agent.

15. The method according to claim 14, further comprising separating the second polymer fine particles and the functionalizing agent.

# Fig. 1

UNUSED POLYMER FINE PARTICLES

$D = 180.2 \pm 28.7$ nm

NUMBER

PARTICLE SIZE $D$ (nm)

POLYMER FINE PARTICLES AFTER DECOMPOSITION

$D = 179.6 \pm 33.8$ nm

NUMBER

PARTICLE SIZE $D$ (nm)

## Fig. 2

# Fig. 3

## INTERNATIONAL SEARCH REPORT

International application No.

**PCT/JP2023/032035**

### A. CLASSIFICATION OF SUBJECT MATTER

***C08J 11/08***(2006.01)i

FI: C08J11/08

According to International Patent Classification (IPC) or to both national classification and IPC

### B. FIELDS SEARCHED

Minimum documentation searched (classification system followed by classification symbols)

C08J11/08,B29C67/00,C08F220/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-353787 A (MINOLTA CO., LTD.) 25 December 2001 (2001-12-25) claims 3, 9, 10, paragraphs [0005], [0086], [0092] | 1, 7, 11, 14-15 |
| Y | same as above | 2-4, 8-10, 12-13 |
| Y | JP 2017-57428 A (SEIKO EPSON CORPORATION) 23 March 2017 (2017-03-23) claims 1, 4, paragraphs [0062]-[0063] | 2-4 |
| Y | JP 2021-195521 A (SHINSHU UNIVERSITY) 27 December 2021 (2021-12-27) claim 1 | 5-6 |
| Y | claims 1, paragraph [0048] | 8-10 |
| Y | claim 2 | 12-13 |
| Y | JP 2022-91113 A (THE YOKOHAMA RUBBER CO., LTD.) 20 June 2022 (2022-06-20) claim 1, paragraph [0022] | 5-6 |
| Y | claim 1, paragraph [0027] | 8-10 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/032035** |

**Box No. III    Observations where unity of invention is lacking (Continuation of item 3 of first sheet)**

This International Searching Authority found multiple inventions in this international application, as follows:

Document 1: JP 2001-353787 A (MINOLTA CO., LTD.) 25 December 2001 (2001-12-25), claims 9, 10, paragraphs [0086], [0092] (Family: none)

The claims are classified into the following three inventions.

(Invention 1) Claims 1-4
    Document 1 discloses "a three-dimensional shaping method in which a powder material is adhesively bonded in a reusable manner and performing shaping, the three-dimensional shaping method including: a step (a) for applying an adhesion liquid containing a decomposable adhesive to a powder material; and a step (b) for curing the adhesion liquid (claim 9). The three-dimensional shaping method according to claim 9 further including a step (c), which is performed after the step (b), for decomposing the adhesion liquid that the shaped object has (claim 10)". A synthetic polymeric material and a natural polymeric material are given as specific examples of the powder material (paragraph [0086]), and it is indicated that a decomposable polymer that can be decomposed by heat, light, electron beam, or micro-organisms can be used as the decomposable adhesive (paragraph [0092]).
    When the invention as in claim 1 and the invention disclosed in document 1 are compared, it is found that the "three-dimensional shaped object" of the latter corresponds to the "molded body of polymer microparticles" of the former, and the "step for decomposing the adhesive that the shaped object has" of the latter, which is a step in which the adhesive is "decomposed by heat, light, electron beam, or micro-organisms", corresponds to "decomposing the molded body into polymer microparticles" of the former.
    Therefore, claim 1 lacks novelty in the light of document 1 and thus does not have a special technical feature.
    However, claim 2 depending from claim 1 has the special technical feature of "the method for applying external stimulation causes the polymer microparticles to expand due to the solvent". Claims 3-4 cite claim 2, and thus, share the same special technical feature with claim 2. Therefore, claims 1-4 are classified as invention 1.

(Invention 2) Claims 5-6
    Claims 5-6 cannot be said to share the same or corresponding features with claim 2 classified as invention 1.
    Furthermore, claims 5-6 do not depend from claim 1 classified as invention 1, and are not substantially identical to or similarly closely related to any of the claims classified into invention 1.
    Therefore, claims 5-6 cannot be classified as invention 1.
    Claims 5-6 are classified as invention 2 as a result of having the special technical feature of "a polymer microparticle molded body in which at least 80 mol% of monomers constituting the polymer are the monomers specified in claim 5.

(Invention 3) Claims 7-15
    Claims 7-15 cannot be said to share the same or corresponding special technical features with claim 2 classified as invention 1 or claim 5 classified as invention 2.
    Furthermore, claims 7-15 do not depend from claim 1 classified as invention 1 or claim 5 classified as invention 2, and are not substantially identical to or similarly closely related to any of the claims classified into invention 1 or invention 2.
    Therefore, claims 7-15 cannot be classified as invention 1 or invention 2.
    Claims 7-15 are classified as invention 3 as a result of having the special technical feature of "a method for recycling polymer microparticles".

Form PCT/ISA/210 (continuation of first sheet) (January 2015)

**INTERNATIONAL SEARCH REPORT**

| International application No. |
| --- |
| **PCT/JP2023/032035** |

| Box No. III      Observations where unity of invention is lacking (Continuation of item 3 of first sheet) |
| --- |

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☑ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/032035**

| Patent document cited in search report | | | Publication date (day/month/year) | Patent family member(s) | Publication date (day/month/year) |
|---|---|---|---|---|---|
| JP | 2001-353787 | A | 25 December 2001 | (Family: none) | |
| JP | 2017-57428 | A | 23 March 2017 | (Family: none) | |
| JP | 2021-195521 | A | 27 December 2021 | (Family: none) | |
| JP | 2022-91113 | A | 20 June 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009030017 A
- JP 2001302842 A
- JP 2006083145 A

- JP 2004196880 A
- JP 2021195521 A
- JP 2022091113 A